# EUROPEAN PATENT SPECIFICATION

(11) **EP 1 950 668 B1**
(45) Date of publication and mention of the grant of the patent: **29.09.2010**
(21) Application number: 07119118.3
(22) Date of filing: 23.10.2007
(51) Int. Cl.: G06F 13/42

(54) **Controlling the timing of a state transition of a serial data line in an I2C Controller**
Zeitsteuerung von einem Zustandsübergang einer seriellen Datenleitung in einer I2C-Steuerung
Contrôle de synchronisation de la transition d'état dans une ligne sérielle des données dans un contrôleur I2C

(30) Priority: 23.01.2007 KR 20070007240
(43) Date of publication of application: 30.07.2008
(73) Proprietor: Samsung Electronics Co., Ltd., Suwon-si, Gyeonggi-do 442-742 (KR)
(72) Inventor: Lee, Dong-soo, Gyeonggi-do (KR); Kim Ki-mo, Seoul (KR)
(74) Representative: Hewett, Jonathan Michael Richard

(56) References cited:
- US-A1- 2003 053 573
- ANONYMOUS: "The I2C-bus specification Version 2.1" PHILIPS SEMICONDUCTORS. PRODUCT SPECIFICATION, January 2000 (2000-01), pages 1-46, XP002218697

## Description

The present invention relates to an INTER-INTEGRATED CIRCUIT (I2C), and more particularly, to a method and apparatus for controlling the timing of a state transition of a serial data line (SDA) in an I2C controller.

An I2C bus is a standard bidirectional serial bus that provides a communication link between peripheral devices by connecting the peripheral devices using only two signal lines. The I2C bus includes a serial clock line (SCL) and a serial data line (SDA). The I2C bus is currently an actual standard solution for built-in devices.

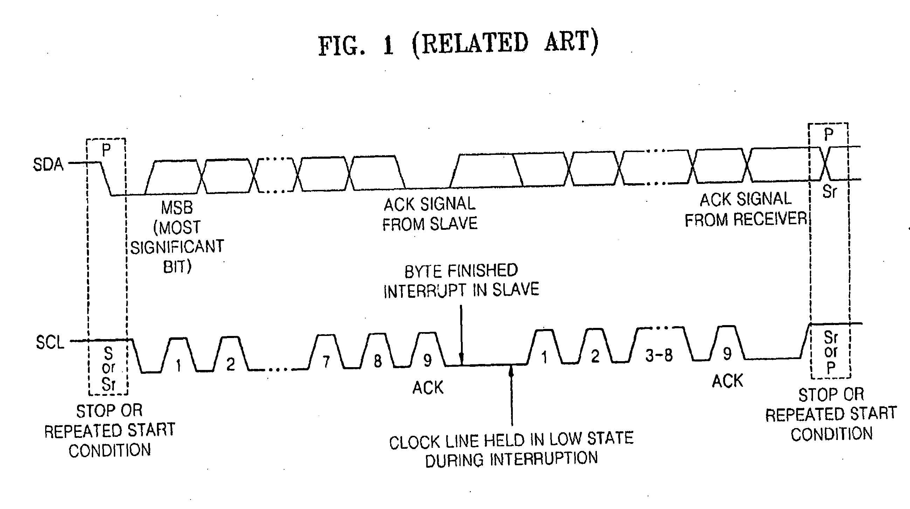

Figure 1 illustrates a basic protocol of an I2C bus.

Referring to Figure 1, serial data, transferred through an SDA, is formatted to include 9-bit data that contains a 1-bit ACKnowledgement (ACK) and 8-bit data.

A master generates a clock signal for data transmission. A start signal and an end signal are used to indicate the start and the end of the data transmission. When the master receives an ACK signal for each 8-bit data transmission from a slave device, it determines that the data transmission is successful. A restart can be used when it is required to transmit data again before the end of the data transmission.

When the master initiates a START condition, slave devices connected to the I2C bus wait for subsequent data. In the START condition, a state in which both an SCL and the SDA are high transits into a state in which the SCL is high and the SDA is low.

When all operations are ended, the master initiates a STOP condition. In the STOP condition, the SDA transits from low to high while the SCL is high.

In actual data transmission, a state transition of data must occur only in a period when the SCL is low, and an SDA signal can be sampled anytime in a period when the SCL is high. At this point, the data is 8-bit data and a most significant bit (MSB) is first transmitted.

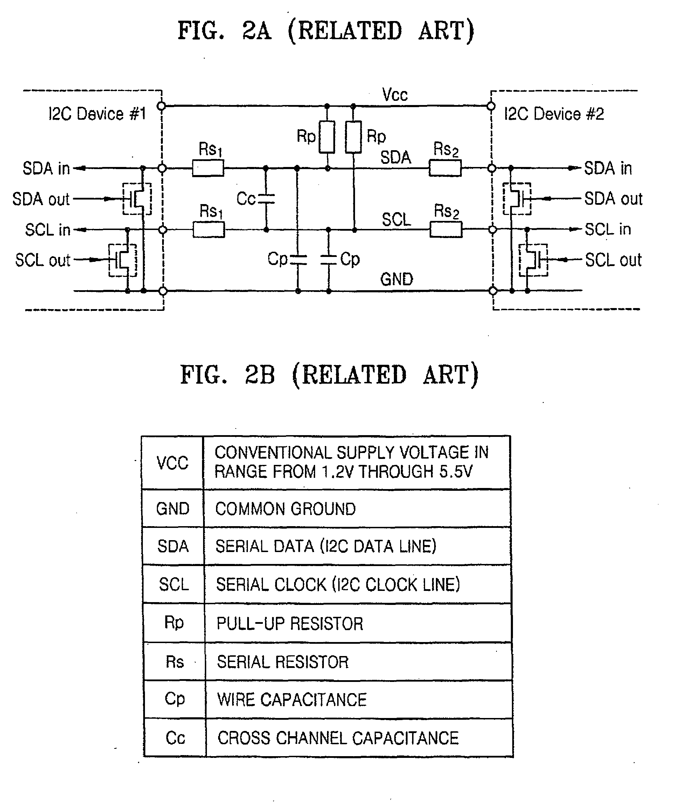

Figures 2A and 2B illustrate a circuit in which a master and a slave are connected using the I2C bus.

Referring to Figures 2A and 2B, an SDA signal and an SCL signal associated with the I2C bus are first generated in digital form inside devices. However, these signals are distorted due to a pull-up resistor, a serial resistor, wire capacitance, and cross channel capacitance during transmission. The distortion is mainly caused by parasitic resistance and parasitic capacitance generated in each device or in a circuit board.

Accordingly, various problems arise. For example, a state transition time of transmitted data increases excessively, and a signal voltage is not enough to be treated as a digital signal because electric charges are not charged and discharged sufficiently.

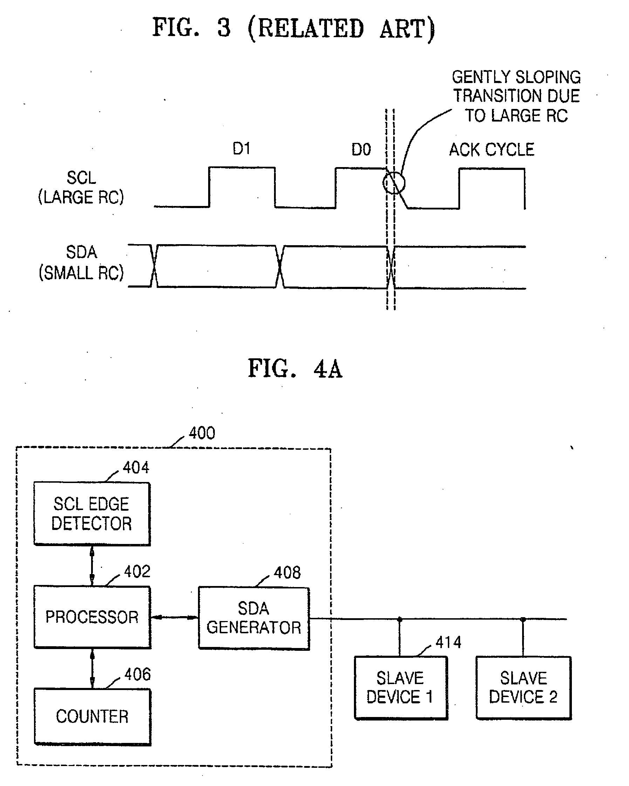

Figure 3 is a timing diagram illustrating a case where a state transition of an SCL occurs later than a state transition of an SDA when a falling time of a clock signal of the SCL increases due to the presence of a large RC component in the SCL. Referring to Figure 3, it is interpreted as though the SDA transits from high to low in a period when the SCL is high, and an I2C controller can recognize this as the generation of a restart signal.

In a period that transmits 8-bit data and 1-bit ACK, if the transmitted data is recognized as the start or end signal of data transmission, the I2C controller and peripheral devices fail to satisfy the timing standards of the I2C and thus malfunction or fall into a wrong state.

Additionally, it is very difficult to precisely predict parasitic components of actual devices. Moreover, the above problems generally occur after a circuit board is completely configured. The use of a compensation circuit or the replacement of the devices is possible, but these methods require a lot of time and cost.

The present invention aims to provide a method and apparatus for controlling the timing of a state transition of a serial data line (SDA) in an I2C controller to prevent the malfunction in an I2C communication by controlling the timing of the state transition of the SDA in the I2C controller without using a compensation circuit which requires a lot of time and cost.

According to an aspect of the present invention, there is provided an apparatus for controlling the timing of a state transition of a serial data line (SDA), including: a serial clock line (SCL) edge detector which detects an edge of a clock signal of an SCL; a counter which counts a hold time of the state transition of the SDA when a falling edge of the clock signal of the SCL is detected by the SCL edge detector; an SDA generator which transits the state of the SDA if the count of the hold time is finished; and a processor which interfaces the SCL edge detector, the counter, and the SDA generator.

The apparatus may further include an I2C slave interface which sets a hold time of the counter by receiving a hold time from a central processing unit (CPU).

The processor may determine if the state transition of the SDA is for the purpose of transmitting a start or end signal of data transmission, or for the purpose of actual data transmission.

The SDA generator may transit the state of the SDA without counting the hold time if the state transition of the SDA is for the purpose of transmitting the start or end signal of the data transmission.

The counter may count in synchronization with a system clock signal received from outside of the I2C controller.

The counter may perform down-counting from the hold time to 0.

The counter may initialize the hold time if a rising edge of the clock signal is detected by the SCL edge detector.

The I2C slave interface may include a register for hold time enable setting.

The counter may be set to a different hold time according to the transmission speed of a slave device.

The hold time may be smaller than a time interval between a rising edge of the clock signal and the state transition of the SDA.

According to another aspect of the present invention, there is provided a method of controlling the timing of a state transition of a serial data line (SDA) in an I2C controller, including: detecting a falling edge of a clock signal of a serial clock line (SCL); counting a hold time of the state transition of the SDA if the falling edge is detected; and transiting the state of the SDA if the count of the hold time is finished.

According to another aspect of the present invention, there is provided a computer-readable recording medium storing a program for executing the method of controlling the timing of a state transition of a serial data line (SDA) in an I2C controller, including: detecting a falling edge of a clock signal of a serial clock line (SCL); counting a hold time of the state transition of the SDA if the falling edge is detected; and transiting the state of the SDA if the count of the hold time is finished.

The above and other aspects of the present invention will become more apparent by describing in detail exemplary embodiments thereof with reference to the attached drawings in which:
Figure 1 illustrates a basic protocol of an I2C bus;
Figures 2A and 2B illustrate a circuit in which a master and a slave are connected using an I2C;
Figure 3 is a timing diagram illustrating a case where a state transition of a serial clock line (SCL) occurs later than a state transition of a serial data line (SDA), when a falling time of a clock signal of the SCL increases due to the presence of a large RC component in the SCL;
Figures 4A and 4B are block diagrams illustrating apparatuses for controlling the timing of a state transition of an SDA according to exemplary embodiments of the present invention;
Figure 5 is a timing diagram illustrating a case where a state transition of an SDA is delayed during a hold time after a falling edge of a clock signal of an SCL according to an exemplary embodiment of the present invention;
Figure 6 is a timing diagram illustrating a timing at which a counter is initialized after a rising edge of a clock signal of an SCL according to an exemplary embodiment of the present invention;
Figure 7 is a flowchart illustrating a method of controlling the timing of a state transition of an SDA according to an exemplary embodiment of the present invention;
Figure 8 is a flowchart illustrating a method of controlling the timing of a state transition of an SDA according to another exemplary embodiment of the present invention;
Figure 9 is a flowchart illustrating a method of controlling the timing of a state transition of an SDA according to another exemplary embodiment of the present invention; and
Figure 10 is a flowchart illustrating a method of controlling the timing of a state transition of an SDA according to another exemplary embodiment of the present invention.

The present invention will now be described more fully with reference to the accompanying drawings, in which exemplary embodiments of the invention are shown.

Figure 4A is a block diagram illustrating an apparatus for controlling the timing of a state transition of a serial data line (SDA) according to an exemplary embodiment of the present invention.

Referring to Figure 4A, an apparatus 400 for controlling the timing of a state transition of the SDA according to an exemplary embodiment of the present invention includes a processor 402, a serial clock line (SCL) edge detector 404, a counter 406, and an SDA generator 408.

The processor 402 is a main controller of an I2C controller, controls the I2C controller's functions (e.g., protocol control and related interrupt control), and interfaces other components.

The SCL edge detector 404 detects a rising edge and a falling edge of a clock signal of an SCL, and transmits detection signals to the processor 402. The clock signal of the SCL is generated by an SCL generator (not shown).

When actual data, not a start or end signal of data transmission, is transmitted, in a case when the SCL edge detector 404 detects the falling edge of the clock signal of the SCL, the state transition of the SDA is possible (because the SCL is low). The processor 402 determines if the state transition of the SDA is for the purpose of transmitting the start or end signal of the data transmission, or for the purpose of transmitting actual data.

The counter 406 counts a hold time of the state transition of the SDA when the falling edge of the clock signal of the SCL is detected by the SCL edge detector 404. The hold time indicates a delay time between the time when the falling edge of the clock signal of the SCL occurs and the time when the state transition of the SDA occurs.

As illustrated in Figure 3, the hold time is needed for preventing slave devices 414 from recognizing that a state transition of the SCL occurs later than the state transition of the SDA when a falling time of the clock signal of the SCL increases due to a large RC component of the SCL.

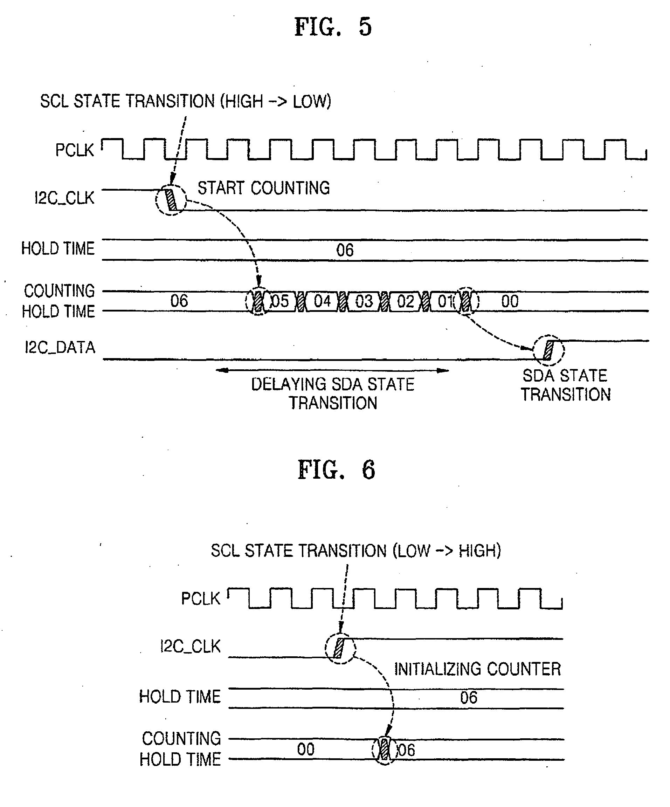

The hold time is counted by the counter 46 in synchronization with a system clock signal (i.e., PCLK in Figures 5 and 6) received from outside of the I2C controller.

Accordingly, when the falling edge of the clock signal of the SCL occurs, the hold time is counted in synchronization with a PCLK. When the count of the hold time is finished, the counter 406 reports this to the SDA generator 408. The SDA generator 408 changes an SDA state.

The processor 402 initializes the hold time of the counter 406 when the rising edge of the clock signal of the SCL is detected by the SCL edge detector 404.

The SDA generator 408 records data to and reads data from the slave devices 414 according to the clock signal of the SCL. The SDA generator 408 changes the SDA state when the counter 406 finishes the count of the hold time.

However, when the state transition of the SDA is for the purpose of transmitting the start or end signal of the data transmission, the SDA generator 408 changes the state of the SDA without counting the hold time. It is because a timing margin, which is required for a start or end of the data transmission, may be reduced if the state transition of the SDA is delayed at the time when the start or end signal of the data transmission is generated.

Therefore, the processor 402 determines if the state transition of the SDA is for the purpose of transmitting the start or end signal of the data transmission, or for the purpose of transmitting actual data, and counts the hold time only when transmitting actual data.

The apparatus 400 for controlling the timing of the state transition of the SDA may be included inside a system-on-chip.

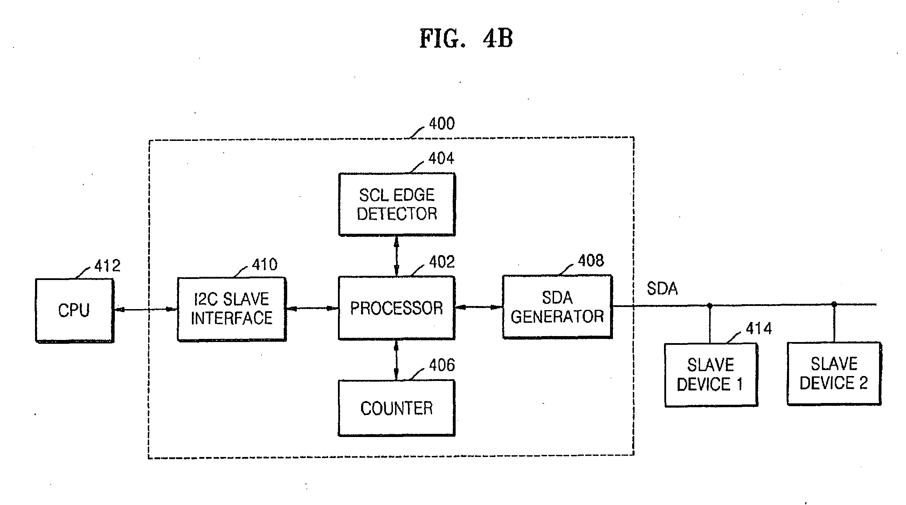

Figure 4B is a block diagram illustrating an apparatus for controlling the timing of a state transition of an SDA according to another exemplary embodiment of the present invention.

Referring to Figure 4B, the apparatus 400 for controlling the timing of the state transition of the SDA according to another exemplary embodiment of the present invention includes a processor 402, an SCL edge detector 404, a counter 406, an SDA generator 408 and an I2C slave interface 410.

The processor 402, the SCL edge detector 404, the counter 406 and the SDA generator 408 in Figure 4B are equal to their counterparts in Figure 4A, and thus a detailed description thereof will be omitted for conciseness.

The I2C slave interface 410 interfaces with a central processing unit (CPU) 412. The I2C slave interface 410 can allow a hold time of the counter 406 to be set by receiving the hold time from the CPU 412 and storing the hold time.

The I2C slave interface 410 may include a register for hold time enable setting so as to turn on/off a delay function which is achieved by counting the hold time.

The CPU 412 controls the I2C slave interface 410 to set the hold time of the counter 406. The hold time of the counter 406 can be set differently according to the transmission speed of slave devices.

The hold time is desired to be smaller than a time interval between a rising edge of a clock signal of the SCL and a state transition of the SDA. A hold time, which is a time interval between a falling edge of a clock signal of the SCL and a state transition of the SDA, is generally small, but a setup time, which is a time interval between a rising edge of a clock signal of the SCL and a state transition of the SDA, requires a relatively large timing margin.

Figure 5 is a timing diagram illustrating a case where a state transition of an SDA is delayed during a hold time after a falling edge of a clock signal of an SCL according to an exemplary embodiment of the present invention.

Referring to Figure 5, the hold time in the present exemplary embodiment is set to 6. A PCLK is a system clock signal received from the outside of an I2C controller. An I2C_CLK is the clock signal of the SCL for transmitting SDA data. I2C_DATA is data that is transmitted through the SDA.

While the I2C_DATA is low, a counter 406 starts to count the hold time when the I2C_CLK changes from high to low. In the present exemplary embodiment, the counter 406 performs down counting from the hold time to 0.

After the down counting is finished, the state of the I2C_DATA is changed by an SDA generator 408. Although the state transition of the I2C_DATA is delayed during the hold time, the operation of a total system is not affected because the frequency of the PCLK is actually much higher than the frequency of the I2C_CLK. Also, a malfunction in an I2C communication may be prevented by the delay of the state transition.

Figure 6 is a timing diagram illustrating a timing at which a counter is initialized after a rising edge of a clock signal of an SCL according to an exemplaryembodiment of the present invention.

Referring to Figure 6, a hold time is set to 6, the counter 405 performs down-counting from the hold time to 0.

In a period when actual data is transmitted, a stage change of an SDA does not occur after the rising edge of the clock signal of the SCL occurs. Accordingly, if the rising edge of the clock signal of the SCL is detected by an SCL edge detector 404, the value of a count is initialized according to a predetermined hold time.

After the I2C transmission speed to slave devices 414 is determined and all circuits associated with the I2C are configured, the hold time may be set by measuring the timing of an I2C analog signal acquired from observing the configured circuits.

An I2C slave interface 410 may include a register for hold time enable setting. The register makes it possible to turn on/off the hold time setting.

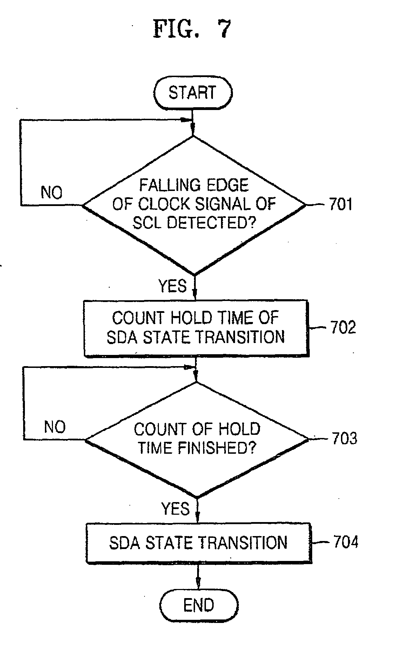

Figure 7 is a flowchart illustrating a method of controlling the timing of a state transition of an SDA according to an exemplary embodiment of the present invention.

Referring to Figure 7, in operation 701, an I2C controller detects a falling edge of a clock signal of an SCL. When actual data, not a start or end signal of data transmission, is transmitted state transition of the SDA is possible in a case when the falling edge of the clock signal of the SCL is detected and the data of the SCL is low.

In operation 702, a hold time of the state transition of the SDA is counted when the falling edge of the clock signal of the SCL is detected. The hold time is counted in synchronization with a system clock signal (i.e., PCLK in Figures 5 and 6) received from outside of the I2C controller. Therefore, the hold time is counted corresponding to the PCLK if the falling edge of the clock signal of the SCL occurs.

In operation 703, the I2C controller determines if the count of the hold time is finished. In operation 704, the I2C controller changes the state of the SDA when the count is finished.

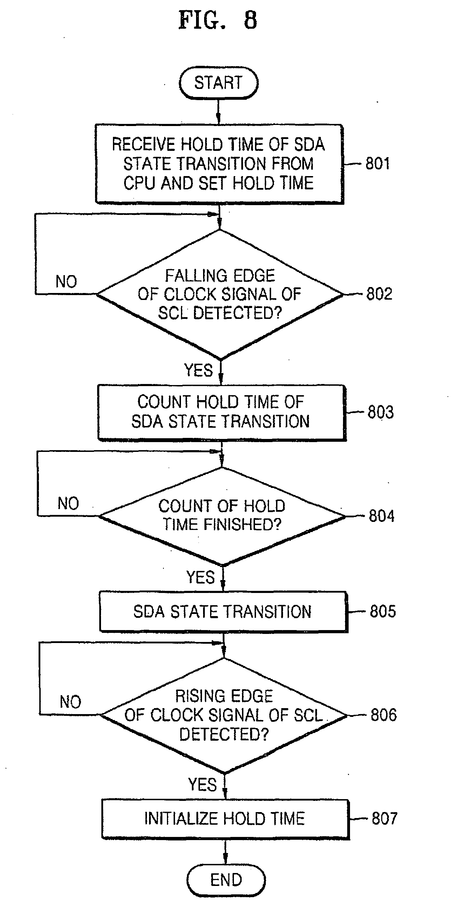

Figure 8 is a flowchart illustrating a method of controlling the timing of a state transition of an SDA according to another exemplary embodiment of the present invention.

Referring to Figure 8, in operation 801, an I2C controller establishes a hold time by receiving a hold time of a state transition of an SDA from a CPU 412. For example, the hold time may be received from the CPU 412 via an I2C slave interface 410.

Operations 802 through 805 in Figure 8 correspond respectively to operations 701 through 704 in Figure 7, and thus a detailed description thereof will be omitted for conciseness.

In operation 806, the I2C controller detects a rising edge of a clock signal of an SCL. In operation 807, the I2C controller initializes the hold time when the rising edge of the clock signal of the SCL is detected. In a period when actual data, not a start or end signal of data transmission, is transmitted, the state transition of the SDA does not occur after the rising edge of the clock signal of the SCL occurs. Accordingly, the I2C controller initializes the hold time (i.e., count value) at that time.

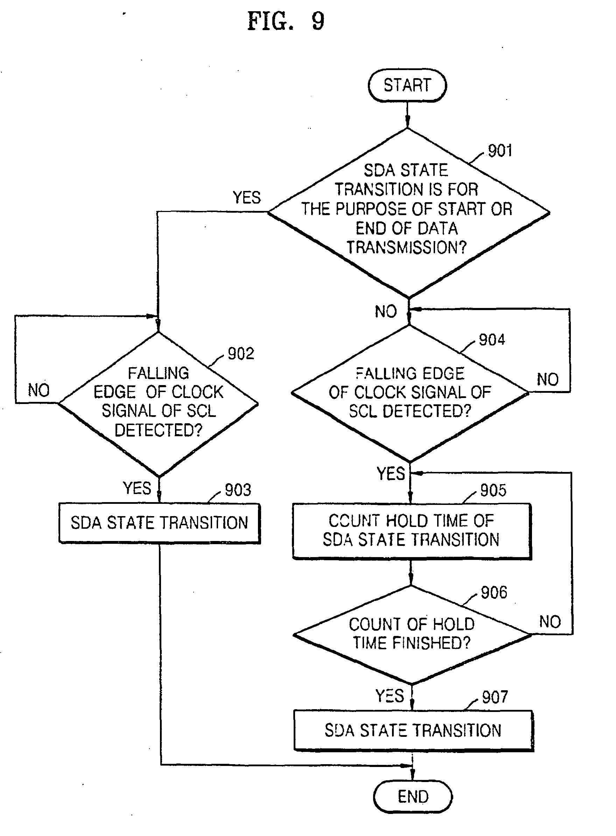

Figure 9 is a flowchart illustrating a method of controlling the timing of a state transition of an SDA according to another exemplary embodiment of the present invention.

Referring to Figure 9, in operation 901, an I2C controller determines if a state transition of the SDA is for the purpose of transmitting a start or end signal of data transmission, or transmitting actual data. It is because a timing margin, which is required for transmitting the start or end signal of data transmission, is reduced if the state transition of the SDA is delayed at the time when the start or end signal of the data transmission occurs.

When the state transition of the SDA is for the purpose of transmitting the start or end signal of the data transmission, the state of the SDA is changed without counting the hold time in operation 903 after the falling edge of the clock signal of the SCL is detected in operation 902.

However, if the state transition of the SDA is for the purpose of transmitting actual data, the I2C controller counts the hold time and changes the state of the SDA in operations 904 through 907. Operations 904 through 907 in Figure 9 correspond respectively to operations 701 through 704 in Figure 7, and thus a detailed description thereof will be omitted for conciseness.

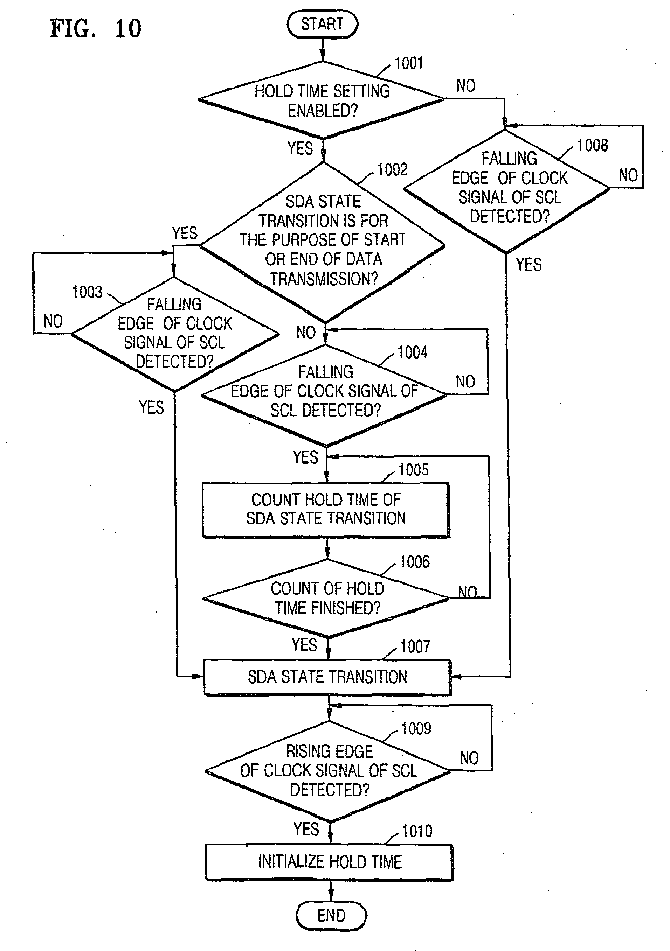

Figure 10 is a flowchart illustrating a method of controlling the timing of a state transition of an SDA according to another exemplary embodiment of the present invention.

Referring to Figure 10, in operation 1001, an I2C controller determines if hold time enable setting is set. The determining operation of the I2C controller is provided for the purpose of permitting users to freely determine the adoption of the hold time enable setting because users may not want to use the hold time enable setting. If the hold time enable setting is set, in operation 1002, the I2C controller determines if the state transition of the SDA is for the purpose of transmitting a start or end signal of data transmission, or transmitting actual data. Operations 1003 through 1007 in Figure 10 correspond respectively to operations 902 through 907 in Figure 9, and thus a detailed description thereof will be omitted for conciseness.

However, if the hold time enable setting is not set, the state of the SDA is changed without counting the hold time in operation 1007 after a falling edge of a clock signal of an SCL is detected in operation 1008.

In operation 1009, the I2C controller detects a rising edge of a clock signal of the SCL. In operation 1010, the I2C controller initializes the hold time if the rising edge of the clock signal of the SCL is detected.

The invention can also be embodied as computer-readable codes on a computer-readable recording medium. The computer-readable recording medium is any data storage device that can store data, which can be thereafter read by a computer system.

Examples of the computer-readable recording medium include read-only memory (ROM), random-access memory (RAM), CD-ROMs, magnetic tapes, floppy disks, optical data storage devices, and carrier waves (such as data transmission through the Internet). The computer-readable recording medium can also be distributed over network-coupled computer systems so that the computer-readable code is stored and executed in a distributed fashion.

The apparatus for controlling the timing of a state transition of an SDA according to the present invention may be included in an I2C controller or a system-on-chip.

As described above, according to the apparatus and method of the present invention for controlling the timing of a state transition of an SDA in an I2C controller, the timing of the state transition of the SDA is controlled to be held for a predetermined time by a counter. Therefore, a malfunction in an I2C communication can be prevented without using a compensation circuit requiring a lot of time and cost.

## Claims

1. An apparatus (400) for controlling the timing of a state transition of a serial data line SDA, the apparatus comprising:
an SCL edge detector (404) for detecting an edge of a serial clock line SCL signal;
an SDA generator (408) for changing a state of the SDA; **characterized by** further comprising
a counter (406) for counting a hold time of the state of the SDA when a falling edge of the clock signal of the SCL is detected by the edge detector; and
a processor for interfacing the SCL edge detector, the counter and the SDA generator, wherein the processor is arranged to determine if the state transition of the SDA is for a purpose of transmitting a start signal of data transmission or an end signal of the data transmission, or for a purpose of data transmission, and to control the SDA generator to change the state of the SDA if the count of the hold time has elapsed, if the state transition of the SDA is for the purpose of a data transmission.

2. The apparatus of claim 1, further comprising an inter-integrated circuit I2C slave interface (410) which sets a hold time of the counter by receiving a hold time from a central processing unit.

3. The apparatus of claim 1 or claim 2, wherein the SDA generator changes the state of the SDA without counting the hold time if the state transition of the SDA is for the purpose of transmitting the start signal of the data transmission or the end signal of the data transmission.

4. The apparatus of claim 2, wherein the counter counts in synchronization with a system clock signal received from outside the I2C controller.

5. The apparatus of any one of claims 1 to 4, wherein the counter performs down-counting from the hold time to zero.

6. The apparatus of any one of claims 1 to 5, wherein the counter initializes the hold time if a rising edge of the clock signal is detected by the SCL edge detector.

7. The apparatus of claim 2, wherein the I2C slave interface comprises a register for enabling setting of the hold time.

8. The apparatus of claim 1, wherein the hold time is set according to a transmission speed of a slave device.

9. The apparatus of claim 1, wherein the hold time is smaller than a time interval between a rising edge of the clock signal and the state transition of the SDA.

10. A method of controlling the timing of a state transition of a serial data line SDA, comprising:
detecting a falling edge of a clock signal of a serial clock line; **characterized by** further comprising
counting a hold time of the state transition of the SDA if the falling edge of the clock signal of the SCL is detected; and
determining if the state transition of the SDA is for a purpose of transmitting a start signal of data transmission or an end signal of the data transmission, or for a purpose of transmitting data; and
changing the state of the SDA if the count of the hold time has elapsed and the state transition is for the purpose of transmitting data.

11. The method of claim 10, further comprising setting the hold time by receiving a hold time of the state transition of the SDA from a central processing unit.

12. The method of claim 10 or claim 11, further comprising changing the state of the SDA without counting the hold time if the state transition of the SDA is for the purpose of transmitting the start signal of the data transmission or the end signal of the data transmission.

13. The method of claim 10, wherein the counting of the hold time comprises counting in synchronization with a system clock signal received from outside an I2C controller.

14. The method of any one of claims 10 to 13, wherein the counting of the hold time comprises performing down counting from the hold time to zero.

15. The method of any one of claims 10 to 14, further comprising:
detecting a rising edge of the clock signal of the SCL; and
initializing the hold time if the rising edge of the clock signal is detected.

16. The method of claim 10, further comprising determining if a hold time enable setting is set.

17. The method of claim 10, wherein the counting of the hold time comprises setting a hold time of the counter according to a transmission speed of a slave device.

18. The method of claim 10, wherein the hold time is smaller than a time interval between a rising edge of the clock signal and the state transition of the SDA.

19. A computer program which, when executed by a processor, is arranged to perform the method of any one of claims 10 to 18.

20. An integrated circuit comprising the apparatus of any one of claims 1 to 9.

## Patentansprüche

1. Gerät (400) zur Zeitsteuerung von einem Zustandsübergang einer seriellen Datenleitung (SDA), wobei das Gerät umfasst:
einen Flankendetektor (404) der seriellen Taktleitung (SCL) zur Erkennung einer Flanke eines Signals der seriellen Taktleitung (SCL);
einen SDA-Generator (408) zur Änderung des Zustands der seriellen Datenleitung (SDA), **dadurch gekennzeichnet, dass** er weiter umfasst:
einen Zähler (406) zum Zählen der Haltezeit des Zustands der seriellen Datenleitung (SDA), wenn eine Abfallflanke des Taktsignals der seriellen Taktleitung (SCL) vom Flankendetektor erkannt wird.
einen Prozessor zum Vernetzen des Flankendetektors der seriellen Taktleitung (SCL), des Zählers und des SDA-Generators, wobei der Prozessor eingerichtet ist, zu bestimmen, ob der Zustandsübergang der seriellen Datenleitung (SDA) für einen Zweck der Sendung eines Startsignals von Datenübertragung oder eines Endesignals der Datenübertragung oder für einen Zweck der Datenübertragung ist und den SDA-Generator zu steuern den Zustand der seriellen Datenleitung (SDA) zu ändern, wenn die Zählung der Haltezeit verstrichen ist, wenn der Zustandsübergang der seriellen Datenleitung (SDA) für den Zweck einer Datenübertragung ist.

2. Gerät nach Anspruch 1, das weiter eine Slave-Schnittstelle (410) mit interintegriertem Schaltkreis I2C umfasst, die eine Haltezeit des Zählers einstellt, indem sie eine Haltezeit von einer Zentraleinheit empfängt.

3. Gerät nach Anspruch 1 oder Anspruch 2, wobei der SDA-Generator den Zustand der seriellen Datenleitung (SDA) ohne Zählen der Haltezeit ändert, wenn der Zustandsübergang der seriellen Datenleitung (SDA) für den Zweck der Sendung des Startsignals der Datenübertragung oder des Endesignals der Datenübertragung ist.

4. Gerät nach Anspruch 2, wobei der Zähler in Synchronisation mit einem Systemtaktsignal zählt, das von außerhalb des I2C-Kontrollers empfangen wird.

5. Gerät nach einem beliebigen der Ansprüche 1 bis 4, wobei der Zähler Rückwärtszählen von der Haltezeit auf null durchführt.

6. Gerät nach einem beliebigen der Ansprüche 1 bis 5, wobei der Zähler die Haltezeit initialisiert, wenn eine Anstiegsflanke des Taktsignals vom Flankendetektor der seriellen Taktleitung (SCL) erkannt wird.

7. Gerät nach Anspruch 2, wobei die I2C-Slavenschnittstelle ein Register zur Aktivierung der Haltezeiteinstellung umfasst.

8. Gerät nach Anspruch 1, wobei die Haltezeit übereinstimmend mit einer Übertragungsgeschwindigkeit eines Slave-Geräts eingestellt wird.

9. Gerät nach Anspruch 1, wobei die Haltezeit kleiner als ein Zeitintervall zwischen einer Anstiegsflanke des Taktsignals und des Zustandsübergangs der seriellen Datenleitung (SDA) ist.

10. Verfahren zur Zeitsteuerung eines Zustandsübergangs einer seriellen Datenleitung (SDA), umfassend:
Erkennen einer Abfallflanke eines Taktsignals einer seriellen Taktleitung, **dadurch gekennzeichnet, dass** es weiter umfasst:
Zählen einer Haltezeit des Zustandsübergangs der seriellen Datenleitung (SDA), wenn die Abfallflanke des Taktsignals der seriellen Taktleitung (SCL) erkannt wird; und
Bestimmen, ob der Zustandsübergang der seriellen Datenleitung (SDA) für einen Zweck der Sendung eines Startsignals von Datenübertragung oder eines Endesignals der Datenübertragung oder für einen Zweck der Sendung von Daten ist; und
Ändern des Zustands der seriellen Datenleitung (SDA), wenn die Zählung der Haltezeit verstrichen ist und der Zustandsübergang für den Zweck der Übertragung von Daten ist.

11. Verfahren nach Anspruch 10, das weiter Einstellung der Haltezeit durch Empfangen einer Haltezeit des Zustandsübergangs der seriellen Datenleitung (SDA) von einer Zentraleinheit umfasst.

12. Verfahren nach Anspruch 10 oder Anspruch 11, das weiter Änderung des Zustands der seriellen Datenleitung (SDA) ohne Zählen der Haltezeit umfasst, wenn der Zustandsübergang der seriellen Datenleitung (SDA) für den Zweck der Sendung des Startsignals der Datenübertragung oder des Endesignals der Datenübertragung ist.

13. Verfahren nach Anspruch 10, wobei das Zählen der Haltezeit Zählung in Synchronisation mit einem Systemtaktsignal umfasst, das von außerhalb des I2C-Kontrollers empfangen wird.

14. Verfahren nach einem beliebigen der Ansprüche 10 bis 13, wobei die Zählen der Haltezeit Durchführen von Rückwärtszählen von der Haltezeit auf null umfasst.

15. Verfahren nach einem beliebigen der Ansprüche 10 bis 14, das weiter umfasst:
Erkennen einer Anstiegsflanke des Taktsignals der seriellen Taktleitung (SCL); und
Initialisieren der Haltezeit, wenn die Anstiegsflanke des Taktsignals erkannt wird.

16. Verfahren nach Anspruch 10, das weiter Bestimmung umfasst, ob eine Aktivierungseinstellung für die Haltezeit eingestellt ist.

17. Verfahren nach Anspruch 10, wobei die Zählung der Haltezeit das Einstellen einer Haltezeit des Zählers übereinstimmend mit einer Übertragungsgeschwindigkeit eines Slave-Geräts umfasst.

18. Verfahren nach Anspruch 10, wobei die Haltezeit kleiner als ein Zeitintervall zwischen einer Anstiegsflanke des Taktsignals und des Zustandsübergangs der seriellen Datenleitung (SDA) ist.

19. Computerprogramm, das, wenn von einem Prozessor ausgeführt, eingerichtet ist, das Verfahren eines beliebigen der Ansprüche 10 bis 18 durchzuführen.

20. Integrierter Schaltkreis, der das Gerät eines beliebigen der Ansprüche 1 bis 9 umfasst.

## Revendications

1. Appareil (400) pour commander la synchronisation d'une transition d'état d'une ligne de données en série SDA, cet appareil comprenant :
un détecteur de flanc de SCL (404) pour détecter un flanc d'un signal de ligne d'horloge en série SCL ;
un générateur de SDA (408) pour changer l'état de la SDA, **caractérisé en ce qu'**il comprend en outre ;
un compteur (406) pour compter un temps de maintien de l'état de la SDA lorsqu'un flanc descendant du signal d'horloge de la SCL est détecté par le détecteur de flanc ; et
un processeur pour interfacer le détecteur de flanc de la SCL, le compteur et le générateur de la SDA, ce processeur étant agencé de façon à déterminer si la transition d'état de la SDA a pour fonction de transmettre un signal de départ de transmission de données ou un signal de fin de transmission de données, ou a pour fonction de transmettre des données et de façon à commander le générateur de la SDA afin de changer l'état de la SDA si le compte du temps de maintien s'est écoulé, si la transition d'état de la SDA a pour fonction une transmission de données.

2. Appareil selon la revendication 1, comprenant en outre une interface esclave de circuit inter-intégré I2C (410) qui règle un temps de maintien du compteur en recevant un temps de maintien depuis une unité centrale.

3. Appareil selon la revendication 1 ou la revendication 2, dans lequel ledit générateur de la SDA change l'état de la SDA sans compter le temps de maintien si la transition d'état de la SDA a pour fonction de transmettre le signal de départ de la transmission de données ou le signal de fin de la transmission de données.

4. Appareil selon la revendication 2, dans lequel le compteur compte en synchronisation avec un signal d'horloge de système reçu depuis l'extérieur du contrôleur I2C.

5. Appareil selon l'une quelconque des revendications 1 à 4, dans lequel le compteur effectue un compte à rebours depuis le temps de maintien jusqu'à zéro.

6. Appareil selon l'une quelconque des revendications 1 à 5, dans lequel le compteur initialise le temps de maintien si un flanc montant du signal d'horloge est détecté par le détecteur de flanc de la SCL.

7. Appareil selon la revendication 2, dans lequel l'interface esclave I2C comprend un registre pour permettre le réglage du temps de maintien.

8. Appareil selon la revendication 1, dans lequel le temps de maintien est réglé selon une vitesse de transmission d'un dispositif esclave.

9. Appareil selon la revendication 1, dans lequel le temps de maintien est plus petit qu'un intervalle de temps entre un flanc montant du signal d'horloge et la transition d'état de la SDA.

10. Procédé de commande de la synchronisation d'une transition d'état d'une ligne de données en série SDA, comprenant :
la détection d'un flanc descendant d'un signal d'une ligne d'horloge en série, **caractérisé en ce qu'**il comprend en outre
le comptage d'un temps de maintien de la transition d'état de la SDA si le flanc descendant du signal d'horloge de la SCL est détecté ; et
la détermination si la transition d'état de la SDA a pour fonction de transmettre un signal de départ de la transmission de données ou un signal de fin de la transmission de données, ou a pour fonction la transmission de données ; et
le changement de l'état de la SDA si le compte du temps de maintien s'est écoulé et si la transition d'état a pour fonction de transmettre des données.

11. Procédé selon la revendication 10, comprenant en outre le réglage du temps de maintien en recevant un temps de maintien de la transition d'état de la SDA depuis une unité centrale.

12. Procédé selon la revendication 10 ou la revendication 11, comprenant en outre le changement de l'état de la SDA sans compter le temps de maintien si la transition d'état de la SDA a pour fonction de transmettre le signal de départ de la transmission de données ou le signal de fin de la transmission de données.

13. Appareil selon la revendication 10, dans lequel le comptage du temps de maintien comprend le comptage en synchronisation avec un signal d'horloge de système reçu depuis l'extérieur d'un contrôleur I2C.

14. Procédé selon l'une quelconque des revendications 10 à 13, dans lequel le comptage du temps de maintien comprend l'exécution du compte à rebours depuis le temps de maintien jusqu'à zéro.

15. Procédé selon l'une quelconque des revendications 10 à 14 comprenant en outre :
la détection d'un flanc montant du signal d'horloge de la SCL ; et
l'initialisation du temps de maintien si le bord montant du signal d'horloge est détecté.

16. Procédé selon la revendication 10, comprenant en outre la détermination de si un réglage de validation du temps de maintien est réglé.

17. Procédé selon la revendication 10, dans lequel le comptage du temps de maintien comprend le réglage d'un temps de maintien du compteur selon une vitesse de transmission d'un dispositif esclave.

18. Appareil selon la revendication 10, dans lequel le temps de maintien est plus petit qu'un intervalle de temps entre un flanc montant du signal d'horloge et la transition d'état de la SDA.

19. Programme informatique qui, lorsqu'il est exécuté par un processeur, est agencé de façon à effectuer le procédé selon l'une quelconque des revendications 10 à 18.

20. Circuit intégré comprenant l'appareil selon l'une quelconque des revendications 1 à 9.
